Europäisches Patentamt

European Patent Office

Office européen des brevets

(19)

(11) Veröffentlichungsnummer: **0 347 482 B1**

(12) **EUROPÄISCHE PATENTSCHRIFT**

(45) Veröffentlichungstag der Patentschrift: **04.12.91**

(21) Anmeldenummer: **88109981.6**

(22) Anmeldetag: **23.06.88**

(51) Int. Cl.⁵: **G01F 11/24**, B65B 1/36

(54) Vorrichtung zum Zuführen und Dosieren eines schüttbaren Füllgutes.

(43) Veröffentlichungstag der Anmeldung:
**27.12.89 Patentblatt 89/52**

(45) Bekanntmachung des Hinweises auf die
Patenterteilung:
**04.12.91 Patentblatt 91/49**

(84) Benannte Vertragsstaaten:
**AT BE CH ES FR GB GR IT LI NL SE**

(56) Entgegenhaltungen:
**EP-A- 0 022 541**
**US-A- 4 231 495**

(73) Patentinhaber: **TEEPACK SPEZIALMASCHINEN GMBH & CO. KG**
**Düsseldorfer Strasse 73**
**W-4005 Meerbusch 1(DE)**

(72) Erfinder: **Rambold, Adolf**
**Bachstrasse 8**
**W-4005 Meerbusch 1(DE)**

(74) Vertreter: **Bringmann, Wolfgang, Dipl.-Ing.**
**NEUMANN KROKE BEISKEN & PARTNER Königsallee 14-16**
**W-4000 Düsseldorf 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 347 482 B1

## Beschreibung

Die Erfindung betrifft eine Vorrichtung zum Zuführen und Dosieren eines schüttbaren Füllgutes nach dem Oberbegriff des Anspruchs 1.

Aus der DE-A-29 28 521 ist eine Vorrichtung der gattungsgemäßen Art bekannt, bei der vor der die Füllkammer in Drehrichtung des Dosierrades begrenzenden Stirnwand mehrere, in Abständen hintereinander angeordnete Zwischenwände vorgesehen sind, die mit dem Dosierrad in dessen Drehrichtung abnehmend hohe Durchlässe bilden. An diesen Zwischenwänden soll überschüssiges Füllgut abgestreift und so gestaut werden, daß sich in den vorhandenen Zwischenräumen sogenannte Nachfüllgutsäulen aufbauen, die während des Füllvorgangs regulierend auf den Fülldruck einwirken sollen, um Dosierfehler und eine nachteilige Wirbelbildung im Bereich des Abstreifers zu verhindern.

Die erhoffte Wirkungsweise hat sich jedoch in der Praxis nicht eingestellt, da das überschüssige Füllgut relativ schnell den Eingangsbereich der Zwischenräume verstopft, so daß die Zwischenräume überschüssiges Füllgut nicht mehr oder nur noch unzureichend aufnehmen. Das überschüssige Füllgut formt sich statt dessen im Bereich der Durchlässe zu einer Art künstilichen Stauwand, die den Füllraum in Richtung Abstreifer in zunehmendem Maße keilförmig verengt und den Fülldruck unkontrolliert ansteigen läßt.

Des weiteren sind Fördereinrichtungen bekannt (US-A-4 053 088), bei denen Schüttgut aus einer Verteilerkammer mittels eines Zellenrades gefördert wird, dessen Umfangsfläche Teil einer Kammerwand ist und mit dieser oberhalb des Zellrades einen Druchlass bildet, dessen lichte Höhe mittels eines Schiebers veränderbar ist. Der auf diese Weise geförderte Schüttgutstrom kann zwar bei vollständig geschlossenem Schieber ebenfalls auf eine durch das Volumen einer einzelnen Kammer des Zellrades bestimmte Schüttgutmenge begrenzt werden, dessen Dosierbarkeit dann aber wiederum abhängig ist von Druckschwankugen innerhalb der Verteilerkammer.

Aufgabe der vorliegenden Erfindung ist es daher, eine Vorrichtung der eingangs genannten Art derart zu verbessern, daß ein in der Höhe kontrollierbarer Fülldruck möglichst über den gesamten Bereich des unteren Öffnungsquerschnitts der Füllkammer nachhaltig gewährleistet ist.

Die Aufgabe wird erfindungsgemäß durch die im Kennzeichen des Anspruchs 1 genannten Merkmale gelöst.

Infolge der treppenförmigen Abstufung der Oberfläche der der Füllkammer zugewandten Stirnwand nimmt der Füllgutdruck in Richtung Umfangsfläche des Dosierrades annähernd in dem Maße ab, wie sich der von der Umlaufgeschwindigkeit des Dosierrades abhängige Staudruck erhöht, so daß der daraus resultierende Fülldruck über den gesamten Öffnungsquerschnitt der Füllkammer im wesentlichen gleichbleibt. Gleichzeitig verhindert die absatzweise Abstufung der Füllkammer jede Art von Wirbelbildung, die zur Entmischung oder sogar zur Zerstörung des Füllgutes führen kann.

Weitere und zum Teil bevorzugte Ausführungsformen der Erfindung, mit deren Hilfe ein selbst in Oberflächenstrucktur und spezifischen Gewicht stark unterschiedliches Füllgut noch genau und schonend dosierbar ist, sind Gegenstand der weiteren Ansprüche 2 bis 6.

Ein Ausführungsbeispiel der Erfindung ist in der Zeichnung dargestellt und wird im folgenden näher beschrieben. Es zeigen

Fig. 1 die erfindungsgemäße Vorrichtung in perspektivischer Darstellung; und

Fig. 2 eine zum Teil geschnittene Teilansicht der Vorrichtung nach Fig. 1 in größerem Maßstab.

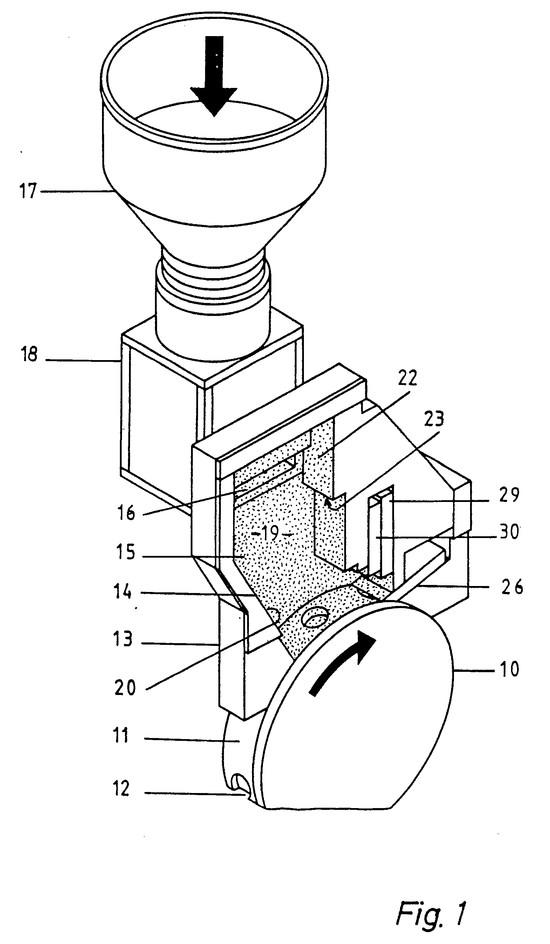

Die in Fig. 1 gezeigte Vorrichtung ist vorzugsweise Teil einer herkömmlichen Teebeutelabpackmaschine, die üblicherweise zum Befüllen und Verschließen von Aufgußbeuteln eingesetzt wird. Die Vorrichtung besteht im wesentlichen aus einem un eine waagerechte Achse im Uhrzeigersinn rotierenden Dosierrad 10 mit mehreren, gleichmäßig über seine Umfangsfläche 11 verteilten Dosierkammern 12 und einem oberhalb der Bewegungsbahn der Dosierkammern 12 angeordneten Gehäuse 13 mit einer Füllkammer 14, die nach unten offen und durch die Umfangsfläche 11 des Dosierades abgeschlossen ist. Die Tiefe der Füllkammer 14 entspricht der Breite der Umfangsfläche 11 des Dosierrades 10. Aus Gründen der Übersichtlichkeit ist in der Zeichnung die die Füllkammer in Draufsicht abschließende Seitenwand weggelassen. In der gegenüberliegenden Seitenwand 15 ist im oberen Teil eine Einlaßöffnung 16 vorgesehen, durch die die Füllkammer über einen Vorfülltrichter 17 und eine nachgeordnete Vorratskammer 18 z.B. mit feingeschnittenem Blatt-Tee als Füllgut 19 beschickbar ist.

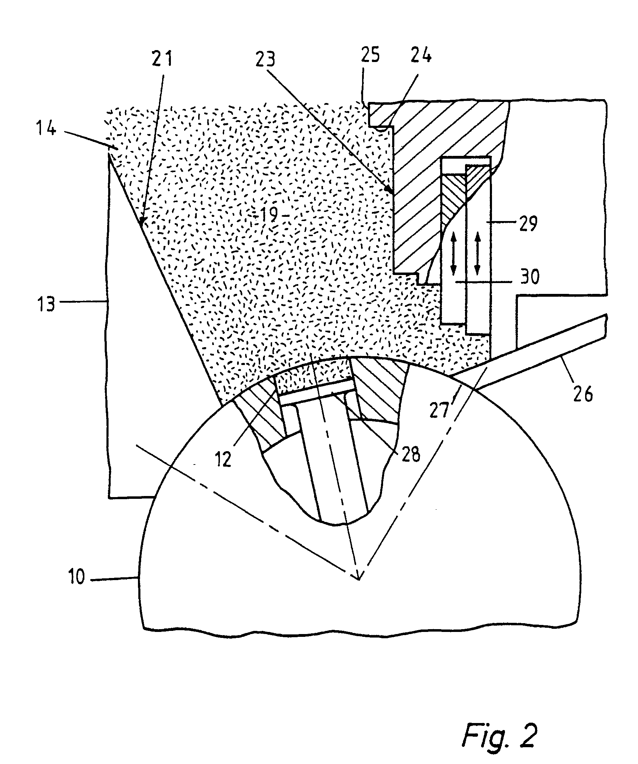

Die vordere Stirnwand 20 der Füllkammer 14 ist im wesentlichen glattflächig und weist im unteren Teil einen nahezu senkrecht zur Umfangsfläche 11 des Dosierrades 10 ausgerichteten Wandbereich 21 auf. Wie insbesondere aus Fig. 2 zu ersehen ist, ist die die Füllkammer 14 in Drehrichtung des Dosierrades 10 begrenzende Stirnwand 22 dagegen treppen förmig abgestuft 23. Die Stufen haben im wesentlichen horizontal ausgerichtete Stufenflächen 24 und senkrechte Stirnflächen 25. Bei der vorliegenden Ausführungsform sind die einzelnen Stufen vorzugsweise gleich tief und unterschiedliche hoch. Am unteren Rand der Stirnwand 22 ist ein sog. Abstreifer 26 längsverschiebbar angeordnet, der sich wenigstens über die Teife der letzten Stufe 29 schräg in das Innere der Füllkammer 14 erstreckt. An seinem freien Ende ist eine Messerkante 27 ausgebildet, die auf der Umfangsfläche 11 des Dosierrades 10 aufliegt und mit der Oberkante der Dosierkammer 12 derart zusammenwirkt, daß überschüssiges Füllgut 19 an der Oberkante der Dosierkammer 12 abgeschnitten wird. Das Volumen der Dosierkammer 12 kann in bekannter Weise mittels eines höhenverstellbaren Bodenteils 28 verändert werden.

Die Stufen erstrecken sich bis unmittelbare Nähe des Abstreifers 26 und enden mit einer senkrechten Stirnfläche, deren Höhe so bemessen ist, daß oberhalb des Abstreifers 26 ein ausreichender Freiraum für das überschüssige Füllgut 19 erhalten bleibt. Vorzugsweise sind zudem die letzte 29 und die vorletzte Stufe 30 höhenverstellbar ausgebildet, so daß bei Bedarf nicht nur das Abstufungsverhältnis, sondern auch der vorhandene Freiraum form- und volumenmäßig verändert werden kann.

Es ist selbstverständlich, daß sowohl die Anzahl als auch die Anordnung der höhenverstellbaren Stufen beliebig variiert werden können. Ebenso ist es denkbar, die einzelnen Stufen unterschiedlich tief auszubilden.

Gemäß einer nicht weiter beschriebenen Ausführungsalternative kann das Dosierrad 10 auch als scheibenförmiger Teller ausgebildet sein, der um eine vertikale Achse rotiert. Die Dosierkammern 12 sind dann in der Telleroberfläche angeordnet bzw. können in Form von Töpfen an der Tellerunterfläche angehängt sein. Bezüglich der Anordnung des Gehäuses 13 sowie der Form der Füllkammer 14 gilt sinngemäß die vorstehende Beschreibung der Ausführungsform gem. Fig. 1 und 2.

## Patentansprüche

1. Vorrichtung zum Zuführen und Dosieren eines schüttbaren Füllgutes mit einem Dosierrad (10), das an seiner Umfangsfläche (11) längs einer Kreisbahn in ihrer Bewegungsrichtung hintereinander angeordnete Dosierkammern (12) ausweist, mit einer oberhalb der Bewegungsbahn der Dosierkammern angeordneten Füllkammer (14), die nach unten durch die Umfangsfläche des Dosierrades und in Drehrichtung des Dosierrades durch eine Stirnwand (22) begrenzt ist, die an ihrem unteren Rand einen auf der Umfangsfläche des Dosierrades aufliegenden Abstreifer (26) aufweist, Wobei der untere Öffnungsquerschnitt der Füllkammer sich in Drehrichtung des Dosierrades erweitert, **dadurch gekennzeichnet,** daß die der Füllkammer (14) zugewandte Oberfläche der Stirnwand (22) treppenförmig abgestuft ist (23).

2. Vorrichtung nach Anspruch 1, **dadurch gekennzeichnet,** daß die Stufen mit dem Abstreifer (26) abschließen, und daß der Abstreifer (26) schräg nach innen in die Füllkammer (14) gerichtet ist und sich wenigstens über die Tiefe der letzten Stufe (29) in das Innere der Füllkammer (14) erstreckt.

3. Vorrichtung nach Anspruch 1 oder 2, **dadurch gekennzeichnet,** daß die Stufen gleich tief und unterschiedlich hoch sind.

4. Vorrichtung nach Anspruch 1 oder 2, **dadurch gekennzeichnet,** daß die einzelnen Stufen unterschiedlich tief ausgebildet sind.

5. Vorrichtung nach einem der Ansprüche 1 bis 4, **dadurch gekennzeichnet,** daß wenigstens eine der Stufen (29, 30) höhenverstellbar ist.

6. Vorrichtung nach einem der Ansprüche 1 bis 5, **dadurch gekennzeichnet,** daß die beiden dem Abstreifer (26) am nächsten liegenden Stufen (29, 30) höhenverstellbar sind.

## Claims

1. A device for feeding and dosing a pourable filling material with a dosing wheel (10) which has dosing chambers (12) arranged one behind the other on its circumferential surface (11) along a circular path in its direction of movement, with a filling chamber (14) arranged above the path of movement of the dosing chambers, which filling chamber is bounded towards the bottom by the circumferential surface of the dosing wheel and in the direction of rotation of the dosing wheel by an end wall (22) which has on its lower edge a stripper (26) resting on the circumferential surface of the dosing wheel, wherein the lower aperture cross-section of the filling chamber expands in the direction of rotation of the dosing wheel, characterised in that the surface - facing the filling chamber (14) - of the end wall (22) is graduated in a stepped manner (23).

2. A device according to claim 1, characterised in that the steps finish with the stripper (26) and in that the stripper (26) is directed obliquely inwards into the filling chamber (14) and extends into the interior of the filling chamber (14) at least over the depth of the last step (29).

3. A device according to claim 1 or 2, characterised in that the steps are of equal depth and differing height.

4. A device according to claim 1 or 2, characterised in that the individual steps are designed so as to be of differing depth.

5. A device according to any one of claims 1 to 4, characterised in that at least one of the steps (29, 30) is vertically adjustable.

6. A device according to any one of claims 1 to 5, characterised in that the two steps (29, 30) lying nearest to the stripper (26) are vertically adjustable.

**Revendications**

1. Dispositif d'alimentation et de dosage pour des matériaux capables de s'écouler, avec une roue de dosage (10), qui comporte à sa surface extérieure, le long d'un cercle, des alvéoles de dosage (12) disposées les unes derrière les autres dans son sens de rotation, avec une alvéole de remplissage (14) placée au-dessus de la trajectoire des alvéoles de dosage et limitée vers le bas par la surface extérieure de la roue de dosage et dans le sens de rotation de la roue de dosage par une cloison frontale (22) comportant, à sa partie inférieure un racleur (26) placé sur la surface extérieure de la roue de dosage et au moyen duquel le diamètre de l'ouverture inférieure de l'alvéole de remplissage peut s'élargir dans le sens de la rotation de la roue de dosage, caractérisé en ce que la surface de la cloison frontale (22) tournée vers l'alvéole de remplissage (14) est étagée en forme de marches (23).

2. Dispositif selon à la revendication 1, caractérisé en ce que les marches sont liées au racleur (26) et que le racleur (26) est orienté obliquement vers l'intérieur de l'alvéole de remplissage (14) et s'étend au moins sur la profondeur de la dernière marche (29) à l'intérieur de l'alvéole de remplissage (14).

3. Dispositif selon à la revendication 1 ou 2, caractérisé en ce que les marches sont de profondeur égale et de hauteur différente.

4. Dispositif selon à la revendication 1 ou 2, caractérisé en ce que les marches sont conçues avec des profondeurs différentes.

5. Dispositif selon à l'une des revendications 1 à 4, caractérisé en ce qu'au moins l'une des marches (29, 30) est à grande plage de réglage.

6. Dispositif selon à l'une des revendications 1 à 5, caractérisé en ce que les deux marches (29, 30) les plus proches du racleur (26) sont à grande plage de réglage.

*Fig. 1*

*Fig. 2*